(19) Europäisches Patentamt
European Patent Office
Office européen des brevets

(11) Publication number: **0 312 258 A2**

(12) **EUROPEAN PATENT APPLICATION**

(21) Application number: 88309349.4

(51) Int. Cl.⁴: C10M 135/04 , //C10N30:06

(22) Date of filing: 07.10.88

(30) Priority: 15.10.87 US 108597
15.10.87 US 108595

(43) Date of publication of application:
19.04.89 Bulletin 89/16

(84) Designated Contracting States:
BE DE FR GB IT NL

(71) Applicant: MOBIL OIL CORPORATION
150 East 42nd Street
New York New York 10017(US)

(72) Inventor: Audeh, Costandi Amin
357 Ewing street
Princeton New Jersey 08540(US)
Inventor: Jackson, Andrew
22 Alta Vista Road
Princeton New Jersey 08540(US)

(74) Representative: Colmer, Stephen Gary
Patent Department c/o Mobil Services
Company Limited Mobil Court 3 Clements
Inn
London WC2A 2EB(GB)

# (54) Lubricant compositions containing oxidized sulfurized isobutylene additive and process for preparing additive.

(57) A lubricant composition made up of a lubricant and an oxidized sulfurized isobutylene prepared by reacting a mild oxidizing agent with commercially available sulfurized isobutylene is disclosed. The lubricant composition imparts improved roller bearing life

EP 0 312 258 A2

# LUBRICANT COMPOSITIONS CONTAINING OXIDIZED SULFURIZED ISOBUTYLENE ADDITIVE AND PROCESS FOR PREPARING ADDITIVE

This invention relates to the oxidation products, particularly mild oxidation products, of sulfurized isobutylene; and to the use of these products in lubricating oil formulations.

U.S. Patent 4,317,738 discloses that improved lubricating oil dispersants can be prepared by oxidizing an olefin and reacting the oxidized olefin with sulfur or a sulfur-yielding compound and an amine. The olefin can have a molecular weight of from about 150 to 140,000, but preferably ranges from about 300 to 100,000. Dispersants are disclosed to be useful in lubricant compositions when used in amounts of about 0.1 to 10 percent based on the oil.

This invention seeks to provide lubricant compositions having improved fatigue resistance characteristics.

This invention provides a process for the preparation of an oxidised sulfurized butylene product; which process comprises reacting liquid sulfurized isobutylene with an oxidizing agent and recovering a liquid oxidized sulfurized isobutylene product.

This invention also provides a lubrioant composition which comprises (i) a lubricant and an oxidized sulfurized butylene product prepared by reacting liquid sulfurized isobutylene with an oxidizing agent and recovering a liquid oxidized sulfurized isobutylene product soluble in the lubricant.

This invention further provides a method of imparting improved fatigue resistance to load-bearing metal surfaces, which method comprises treating the surfaces with an oxidised sulfurised butylene product prepared as herein described.

In preparing the lubricant composition of this invention the oxidation of sulfurized isobutylene is effected by mixing the liquid sulfurized isobutylene in a suitable liquid organic carrier which is not reactive with the oxidizing agent. Suitable carriers include benzene, toluene and xylene. A oxidizing agent, preferably a mild oxidising agent and preferably mixed with an aqueous solution of an acid, such as sulfuric acid, is added to the sulfurized isobutylene solution; and the mixture is then agitated sufficiently to ensure contact between the peroxide and the sulfurized isobutylene. The resultant mixture is then allowed to settle into two separate phases and the liquid immiscible organic layer is removed and reserved for further treatment. The organic layer is then further treated, such as with a reducing agent to remove any unreacted oxidising agent and can be further washed to remove traces of acid.

In preparing the oxidized sulfurized isobutylene product of this invention it is preferred to use a mole ration of oxidizing agent of between 0.5 and 2.5 moles of equivalent oxygen to one mole of sulfurized isobutylene. The sulfurized butylene used can be any commercially available one. Preferred is one having an average molecular weight of 432. Reaction temperature can be between $20^\circ$ C and $95^\circ$ C.

Although hydrogen peroxide is preferred in the practice of this invention, other oxidants which can be used include potassium or sodium permanganate, iodate, perborate and dichromate salts as well as peracids such as perchloric, permanganic, permonosulfuric and persulfuric acids. Tertiary butyl hypochlorite or acylnitrites may also be used.

The reaction between the oxidizing agent and the sulfurized isobutylene is thought to result in the formation of sulfoxides and sulfones as shown in the generalized reactions I and II below:

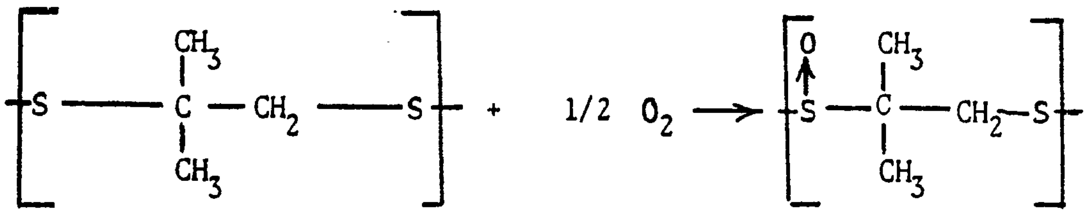

(I)

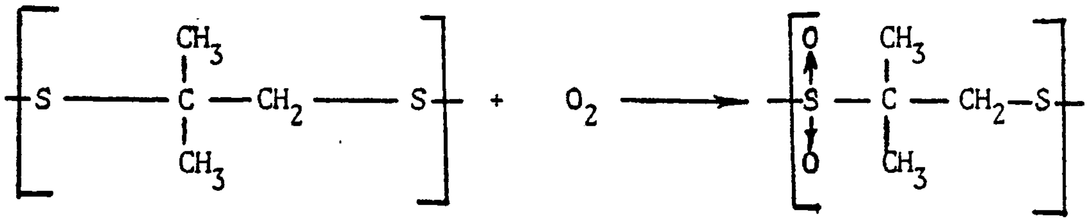

(II)

The oxidized sulfurized isobutylene products are used with lubricating oils or greases in an amount from 0.1% to 10%, preferably 0.5% to 7.5%, by weight of the total composition. Furthermore, other additives, such as detergents, antioxidants and antiwear agents may be present. These can include phenates, sulfonates, succinimides, zinc dialkyl dithiophosphates, polymers, calcium and magnesium salts of phenates and sulfonates, including overbased salts of the same.

The lubricants contemplated for use with the products herein disclosed include mineral and synthetic hydrocarbon oils of lubricating viscosity, mixtures of mineral oils and synthetic oils and greases from any of these, including the mixtures. The synthetic hydrocarbon oils include olefin polymers such as oligomers of hexene, octene, decene, and dodecene. Other synthetic oils, which can be used alone with the compounds of this invention, or which can be mixed with a mineral or synthetic hydrocarbon oil, include (1) fully esterified ester oils, with no free hydroxyl groups, such as pentaerythritol esters of monocarboxylic acids having 2 to 20 carbon atoms, trimethylolpropane esters of monocarboxylic acids having 2 to 20 carbon atoms, (2) polyacetals and (3) siloxane fluids. Especially useful among the synthetic esters are those made from polycarboxylic acids and monohydric alcohols. More preferred are the ester fluids made by fully esterifying pentaerythritol, or mixtures thereof with di- and tripentaerythritol, with an aliphatic monocarboxylic acid containing from 1 to 20 carbon atoms, or mixtures of such acids.

A wide variety of thickening agents can be used in the grease compositions of this invention. Included among the thickening agents are alkali and alkaline earth metal soaps of fatty acids and fatty materials having from about 12 to about 30 carbon atoms per molecule. The metals are typified by sodium, lithium, calcium and barium. Fatty materials are illustrated by stearic acid, hydroxystearic acid, stearin, cottonseed oil acids, oleic acid, palmitic acid, myristic acid and hydrogenated fish oils.

Other thickening agents include salt and salt-soap complexes such as calcium stearate-acetate (U.S. Patent 2,197,263), barium stearate acetate (U.S. Patent 2,564,561), calcium stearate-caprylate-acetate complexes (U.S. Patent 2,999,065), calcium caprylate-acetate (U.S. Patent 2,999,066), and calcium salts and soaps of low-, intermediate- and high-molecular weight acids and of nut oil acids.

Another group of thickening agents comprises substituted ureas, phthalocyanines, indanthrene, pigments such as perylimides, pyromellitdiimides, and ammeline.

The preferred thickening gelling agents employed in grease compositions are essentially hydrophobic clays. Such thickening agents can be prepared from clays which are initially hydrophilic in character, but which have been converted into a hydrophobic condition by the introduction of long chain hydrocarbon radicals onto the surface of the clay particles prior to their use as a component of a grease composition, as, for example, by being subjected to a preliminary treatment with an organic cationic surface active agent, such as an onium compound. Typical onium compounds are tetraalklylammonium chlorides, such as dimethyl dioctadecyl ammonium chloride, dimethyl dibenzyl ammonium chloride and mixtures thereof. More specifically, the clays which are useful as starting materials in forming the thickening agents to be employed in the grease compositions, can comprise the naturally occurring chemically unmodified clays. These clays can be described as complex inorganic silicates such as aluminum silicates, magnesium silicates and, barium silicates containing, in addition to the silicate lattice, varying amounts of cation-exchangeable groups such as sodium. Hydrophilic clays which are particularly useful for conversion to desired thickening agents include montmorillonite clays, such as bentonite, attapulgite, hectorite, illite, saponite, sepiolite, biotite, vermiculite and, zeolite clays. The thickening agent is employed in an amount from 0.5 to 30, and preferably from 3 percent to 15 percent by weight of the total grease composition.

The following Examples illustrate the invention.

In the following Examples the rolling contact fatigue property of lubricants containing the oxidized sulfurized isobutylene of this invention is compared with that of compositions containing unoxidized sulfurized butylene compositions. Lubricant fatigue properties are measured in terms of $L_{10}$ and $L_{50}$ of tapered roller bearings which is the length of time after which 10 percent or 50 percent respectively of a given number of bearings could be expected to fail by rolling contact fatigue.

## EXAMPLE 1

This Example illustrates the preparation of the reaction products of this invention. A commercially available sulfurized isobutylene (136 grams) was dissolved in 100 ml. of toluene. Ten (10) ml of a 20-percent aqueous solution of sulfuric acid was added to 55 grams of a 30-percent aqueous solution of hydrogen peroxide. The acidified solution of $H_2O_2$ was then added dropwise with constant stirring at ambient room temperature to the solution of isobutylene in toluene. The resulting mixture was heated to about 80 °C and allowed to react for a period of four hours. The mixture was allowed to cool to room temperature and to separate into an aqueous layer and an organic layer. The liquid organic layer was decanted and mixed with about 0.2 grams of manganese dioxide to destroy any unreacted peroxide entrained in the organic layer. This treated layer was then washed with an aqueous solution of sodium bicarbonate and then with water alone. The product was then dried over magnesium sulfate and distilled to remove the toluene under vacuum at room temperature. This product when examined by infra-red analysis exhibited absorption bands typical of sulfoxides and sulfones.

## EXAMPLE 2

This Example illustrates the properties of sulfurized isobutylene which has not been mildly oxidized as disclosed herein. One-and-a-half grams of the commercial sulfurized isobutylene used in the preparation of the product of Example 1, was added to 100 grams of a lube oil base stock having a viscosity of 464 centistokes at 40 °C, a viscosity of 29.9 at 100 °C and a viscosity index of 93. This mixture was then tested by the 4-ball weld test which measures the ability of the additive to withstand extreme pressure, EP. In this test two results are reported; the first number measures the weld load and is reported in kilograms. The second number is a dimensionless one and is designated as the load wear index (LWI). The formulation in this example yielded the test results: 315 kg and 58.6 LWI, respectively.

## EXAMPLE 3

This Example illustrates the properties of the oxidized sulfurized butylene composition prepared in Example 1. In this example 1.5 grams of the material prepared in Example 1 were mixed with 100 grams of the same lube oil and then tested as in Example 2. Results were 315 kg. and and LWI of 58.3.

Examples 1 and 2 demonstrate that both formulations, Example 1 containing 1.5 percent of sulfurized isobutylene, and Example 2 containing oxidized sulfurized isobutylene have the ability to withstand extreme pressure. Those skilled in the art are aware of the specifications of 250 kg and 45 LWI by which EP additives are measured.

## EXAMPLE 4

The following examples demonstrate the superiority of the oxidized sulfurized butylene compositions over the sulfurized butylene compositions when tested on tapered roller bearings. In this Example 4 the lube oil base stock formulated with sulfurized isobutylene as in Example 2 was tested, yielding an $L_{10}$ of 291 hours and an $L_{50}$ of 564 hours.

## EXAMPLE 5

The same base lube oil stock was formulated with the oxidized sulfurized isobutylene prepared in Example 1 and tested in the tapered roller bearing tester. Results of tests in the tapered roller bearing tester were: $L_{10}$ 405 hours and $L_{50}$ 898 hours. This example demonstrates that the oxidized sulfurized isobutylene extends the $L_{10}$ and $L_{50}$ lives of bearings when compared with the unoxidized sulfurized isobutylene.

## Claims

1. A process for the preparation of an oxidised sulfurized butylene product; which process comprises reacting liquid sulfurized isobutylene with an oxidizing agent and recovering a liquid oxidized sulfurized isobutylene product.

2. A process according to claim 1 wherein the sulfurized isobutylene is dissolved in a carrier liquid which comprises benzene, toluene, xylenes or other organic solvents which do not react with the oxidizing agent.

3. A process according to Claim 1 or 2 wherein the mole ratio of oxidising agent (as equivalent oxygen) to sulfurized olefin is from 0.5 to 2.5.

4. A process according to claim 3 wherein the oxidising agent is used in aqueous solution which is acidified before being reacted with the sulfurized isobutylene .

5.A process according to any preceeding claim wherein the oxidizing agent comprises hydrogen peroxide.

6. A process according to any preceeding claim wherein the oxidizing agent comprises an aqueous solution of potassium or sodium permanganate, potassium or sodium dichromate, potassium or sodium iodate, or potassium or sodium perborate.

7. A process according to any preceeding claim wherein the oxidizing agent comprises an aqueous solution of a peracid which comprises perchloric, permanganic, permonosulfuric and persulfuric acid.

8. A process according to any preceeding claim wherein the recovered reaction product is purified by washing with water.

9. A lubricant composition which comprises (i) a lubricant and an oxidized sulfurized butylene product prepared by reacting liquid sulfurized isobutylene with an oxidizing agent and recovering a liquid oxidized sulfurized isobutylene product soluble in the lubricant.

10. A lubricant composition according to claim 9 wherein (ii) is prepared in accordance with any of claims 2 to 8.

11. A lubricant composition according to claim 9 or 10 wherein (ii) comprises from 0.1 to 10 percent by weight of the lubricating composition.

12. A lubricant composition according to claim 9, 10 or 11 wherein (i) comprises a mineral oil, a synthetic oil, a mixture thereof, or a grease.

13. The use of an oxidised sulfurized butylene product prepared according to claims 1 to 8 to impart improved fatigue resistance to load-bearing metal surfaces treated therewith.